# EUROPÄISCHE PATENTSCHRIFT

(11) **EP 3 178 759 B1**
(45) Veröffentlichungstag und Bekanntmachung des Hinweises auf die Patenterteilung: **01.09.2021**
(21) Anmeldenummer: 15198158.6
(22) Anmeldetag: 07.12.2015
(51) Int. Cl.: B65G 13/06, B65G 13/10, B65G 13/071

(54) **TRANSPORTROLLEN-FÖRDERSYSTEM**
TRANSPORT ROLLER CONVEYING SYSTEM
SYSTÈME DE CONVOYEUR À ROULEAUX

(43) Veröffentlichungstag der Anmeldung: 14.06.2017
(73) Patentinhaber: Siemens Aktiengesellschaft, 80333 München (DE)
(72) Erfinder: ASCHPURWIS, Carsten, 78464 Konstanz (DE)
(74) Vertreter: Siemens Patent Attorneys

(56) Entgegenhaltungen:
- WO-A1-2014/066838
- WO-A2-2015/121786

## Beschreibung

Die Erfindung bezieht sich auf das technische Gebiet der Fördersysteme für Güter, insbesondere auf das gerichtete Fördern erlaubende Fördersysteme.

Ein gerichtetes Fördern von Gütern in einstellbare Transportrichtungen auf einer Förderstrecke hat besondere Bedeutung in Sortieranlagen, insbesondere Post- und Gepäcksortieranlagen, und Fertigungsanlagen. Eine in die Förderstrecke integrierte Lösung zum Einstellen der Transportrichtungen kann teure Komponenten, beispielsweise einen Eckumsetzer, überflüssig machen. Insbesondere bei fragilen Gütern ist es vorteilhaft, wenn das Fördern schonend abläuft, also ohne Kollisionen mit einem Rand der Förderstrecke oder anderen Komponenten, wodurch die Güter beschädigt werden können. Auf Transportrutschen sammeln sich Güter nach ihrem Abwurf aufgrund ihrer Trägheit häufig auf einer Ansammlungsseite an, wodurch eine vollständige Ausnutzung der Transportrutschenbreite als Speicherplatz erschwert ist.

Stand der Technik zum gerichteten Fördern ist die Verwendung von Schwenkrollen, welche auf einer vertikalen Achse gelagert sind. Um diese Achse werden die Schwenkrollen einzeln oder als Zeile über Lenker in ihrer Winkeleinstellung verändert, wie dies zum Beispiel durch WO2014/066838 A1 bekannt ist.

Eine andere Lösung verwendet orthogonal freidrehende Rollen. Wenn in eine spezifische Richtung aktiv gefördert werden soll, werden zusätzliche Rollen an ein Gut hochgefahren. Eine weitere Lösung verwendet eine zylindrische, in einem Gliedergurt schräg angeordnete Rolle. Ein Quertransport wird ausgelöst, indem eine Reibfläche von unten an den Gliedergurt gebracht wird, wodurch die zylindrische Rolle eine Zwangsbewegung ausführt. Bei Transportrutschen werden an einer Rutschseite angebrachte Abweiserbleche genutzt, die den Gütern bei einem Abprallen einen Impuls weg von der Ansammlungsseite geben. Alternativ wird die Transportrutsche leicht quer geneigt, um die Schwerkraft auszunutzen. Beide Lösungen führen jedoch nur zu einer leicht verbesserten, jedoch lange nicht gleichmäßigen Verteilung der Güter entlang der Rutschbreite und können darüber hinaus die Güter beschädigen. Daher ist eine verbesserte Lösung weiterhin erforderlich.

Die oben dargestellten Lösungen umfassen eine Vielzahl an bewegten Teilen und Lagern, sind daher in ihrer technischen Realisierung relativ aufwendig und somit auch fehleranfällig und/ oder können die Güter beschädigen.

Der vorliegenden Erfindung liegt daher die Aufgabe zugrunde, eine technisch einfach realisierbare, robuste und güterschonende Lösung zum gerichteten Fördern von Gütern mit vielseitigem Einsatzbereich zu ermöglichen. Diese Aufgabe wird durch die in den unabhängigen Ansprüchen beschriebenen Lösungen gelöst.

Die erfindungsgemäße Lösung sieht ein Fördersystem vor, welches geeignet ist zum Transport von Gütern auf einer Transportebene. Das Fördersystem umfasst mindestens eine für den Transport der Güter vorgesehene Transportrolle, welche zumindest in einem für einen Kontakt mit den Gütern vorgesehenen Bereich eine umlaufende kugeloberflächenausschnittartige Oberfläche aufweist. Die mindestens eine Transportrolle ist um ihre Drehachse rotierbar und das Fördersystem weist mindestens eine Schwenkachse auf, um welche die Drehachse durch Rotation verstellbar ist.

Gemäß einer bevorzugten Ausführungsform kann die mindestens eine Schwenkachse im Wesentlichen parallel zur Transportebene angeordnet sein. Dies ermöglicht eine Befestigung der Schwenkachse parallel unterhalb der Transportebene und erlaubt eine Rotation der Schwenkachse um ein Gut abzulenken ohne Beeinträchtigung seines Transportweges auf der Förderstrecke.

Um auf besonders einfache Art und Weise eine gerichtetes Fördern eines Gutes zu ermöglichen, können die Drehachse und die mindestens eine Schwenkachse einen Drehachsenwinkel einschließen. Bei paralleler Anordnung der Schwenkachse, orthogonal zu einer unabgelenkten Transportrichtung des Gutes, kann so eine beidseitige Ablenkung, um den Drehachsenwinkel oder geringer, erzielt werden.

Um einen aktiven und/ oder passiven, gelenkten Transport von Gütern auf der Transportebene mit der mindestens einen Transportrolle auf unterschiedliche Weise zu ermöglichen, kann die mindestens eine Transportrolle antreibbar sein. Die mindestens eine Transportrolle kann insbesondere um ihre Drehachse mit einem Antrieb in der Transportrolle und/ oder einem unterhalb der Transportrolle angeordneten Antriebsmittel und/ oder Schwerkraftförderung antreibbar sein. Insbesondere die Schwerkraftförderung ermöglicht einen besonders energiearmen Antrieb bei gleichzeitiger Überwindung eines Höhenunterschieds, beispielsweise auf einer Transportrutsche als zumindest teilweise geneigte Transportebene.

Um eine besonders einfache Positionierung der Transportrolle im Fördersystem mit einem gängigen Bauteil zu erzielen, insbesondere mit einer definierten Lage auf einer Welle, kann das Fördersystem mindestens einen Schrägsteller umfassen, mit welchem die Drehachse der mindestens einen Transportrolle schräg einstellbar ist.

Um einen wartungsarmen Betrieb des Fördersystems, mit einer reibungsarmen Rotation der mindestens einen Transportrolle um ihre Drehachse zu erzielen, kann die mindestens eine Transportrolle mindestens ein Lager, insbesondere ein Wälzlager, umfassen.

Um einen möglichsten guten Schutz der Bauteile des Fördersystems unterhalb der Transportebene zu erzielen und um zu verhindern, dass sich die Güter im Fördersystem verfangen und dabei beschädigt werden, kann eine Abdeckung unterhalb der Transportebene angeordnet sein, wobei die Abdeckung eine Aussparung für jede Transportrolle umfasst.

Um über einen möglichst großen Bereich eine möglichst effektive Ablenkung von einem Gut oder mehreren Gütern und/ oder eine gleichzeitige Ablenkung von mehr als einem Gut zu erzielen, kann das Fördersystem mehrere Transportrollen umfassen, die entlang einer Breite und/ oder einer Länge der Transportebene angeordnet sind. So können die mehreren Transportrollen ein Gut oder mehrere Güter über die Breite und/ oder Länge der Transportebene geführt transportiert werden. Die Transportrollen können ein rollenteppichartiges Fördersystem ausbilden.

Gemäß einer bevorzugten Ausführungsform kann die Transportrolle kugelartig oder kugelzonenartig ausgestaltet sein. Bei einer vollständig kugelartigen Ausgestaltung der Transportrolle ist die gesamte Oberfläche der Transportrolle umlaufend kugeloberflächenartig und somit für einen Kontakt mit den Gütern vorgesehen. Dadurch kann die Transportrolle vollständig um ihre Schwenkachse rotiert werden. Bei einer kugelzonenartigen Ausgestaltung der Transportrolle kann die Oberfläche der Transportrolle in einem über dem mit Kontakt mit den Gütern vorgesehenen Bereich umlaufend kugeloberflächenartig sein, wodurch Transportebene und eine weitere Tangentialfläche stets einen gleichen Abstand aufweisen.

Um eine besonders einfache Rotation der mindestens einen Transportrolle um ihre Schwenkachse zu ermöglichen, können die eine oder die mehreren Transportrollen auf mindestens einer Welle gelagert sein. Bei Lagerung auf nur einer Welle kann besonders einfach eine gleichzeitige Rotation der auf dieser Welle gelagerten Transportrollen erreicht werden, bei Lagerung auf mehr als einer Welle kann besonders einfach eine individuelle Rotation der einzelnen Wellen und somit von je einer oder mehrerer auf besagter Welle gelagerter Transportrollen erreicht werden.

Damit sich Welle und die mindestens eine Transportrolle auch ohne oder bei unterbrochener Kraftübertragung nicht voneinander lösen können und damit die Welle und die mindestens eine Transportrolle besonders gut ineinandergreifen, kann die mindestens eine Welle formschlüssig und/ oder kraftschlüssig mit der mindestens einen Transportrolle verbindbar sein. Damit sind Welle und Transportrolle gegen Verdrehen gesichert, was eine effiziente Weiterleitung einer Rotationsbewegung über die Welle an die mindestens eine Transportrolle erlaubt.

Hinsichtlich eines Verfahrens wird die vorstehend genannte Aufgabe gelöst durch ein Verfahren zum Transport von Gütern mit einem Fördersystem auf einer Transportebene, wobei das Fördersystem mindestens eine für den Transport der Güter vorgesehene Transportrolle umfasst, welche zumindest in einem für einen Kontakt mit den Gütern vorgesehenen Bereich eine umlaufende kugeloberflächenausschnittartige Oberfläche aufweist. Die Transportrolle ist um ihre Drehachse rotierbar und das Fördersystem weist mindestens eine Schwenkachse auf, um welche die Drehachse durch Rotation verstellbar ist. Das Verfahren umfasst den Verfahrensschritt eines rotierendes Antreibens der mindestens einen Transportrolle, insbesondere mit einem Antrieb in der Transportrolle und/ oder einem unterhalb der Transportrolle angeordneten Antriebsmittel und/ oder Schwerkraftförderung.

Um auf besonders einfache Weise eine Richtungsänderung eines auf der Transportebene transportierten Gutes zu erzielen, kann eine Schrägstellung der Drehachse der mindestens einen Transportrolle um ihren Drehachsenwinkel und/ oder ein Verstellen der Drehachse durch Rotation um ihre Schwenkachse erfolgen.

Um mehr als eine Transportrolle mit geringem Betriebsaufwand zu betreiben, kann ein gemeinsames rotierendes Antreiben von mehr als einer Transportrolle erfolgen. Das gemeinsame rotierende Antreiben kann besonders einfach erfolgen, wenn mehr als eine Transportrolle auf einer Welle gelagert ist.

Um mit mehreren Transportrollen gleichzeitig ein oder mehrere Güter konzertiert in eine gleiche Transportrichtung oder in verschiedene Transportrichtungen zu transportieren, können zwei oder mehr der Transportrollen parallele und/ der nicht parallele Drehachsen, parallele und/ oder identische Schwenkachsen und gleiche und/ oder verschiedene Schwenkachsenwinkel aufweisen.

Bevorzugte Ausführungsbeispiele der Erfindung werden nachfolgend anhand der Figuren beispielsweise näher erläutert. Dabei zeigen:
- Figur 1: schematisch eine seitliche Ansicht eines Fördersystems;
- Figur 2: ein Fördersystem wie in Figur 1 dargestellt mit technischen Details einer Transportrolle;
- Figur 3: eine Aufsicht auf drei Transportrollen mit unterschiedlich ausgerichteten Schwenkachsen;
- Figur 4: einen Querschnitt einer Transportrolle mit einer Abdeckung;
- Figur 5: eine seitliche Ansicht eines mehrere Transportrollen umfassenden Fördersystems; und
- Figur 6: eine Transportrutsche.

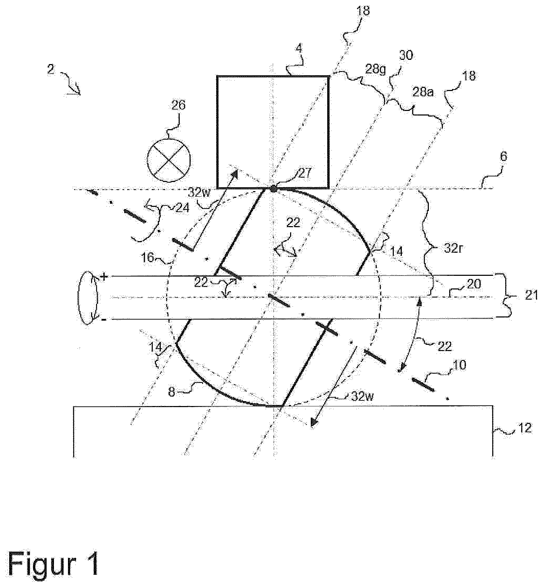

Figur 1 zeigt schematisch eine seitliche Ansicht eines Fördersystems 2 gemäß einer bevorzugten Ausführungsform der Erfindung. Das Fördersystem 2 ist ausgestaltet und geeignet zum Transport von einem Gut 4, insbesondere Stückgüter wie beispielsweise Koffer, Gepäckstücke und Postsendungen, auf einer Transportebene 6 und umfasst eine für einen Transport eines Gutes 4 vorgesehene Transportrolle 8, welche eine ausgezeichnete Drehachse 10 aufweist. Die Transportrolle 8 ist um ihre Drehachse 10 rotierbar und mit einem unterhalb der Transportrolle 8 angeordneten Antriebsmittel 12, beispielsweise einer Antriebsrolle oder einem Antriebsband, antreibbar, insbesondere um ihre Drehachse 10.

Die Transportrolle 8 weist eine von einer Kugel hergeleitete Form auf, so dass die Transportrolle 8 zumindest in einem für einen Kontakt mit dem Gut 4 vorgesehenen Bereich eine umlaufende kugeloberflächenartige Oberfläche 14 aufweist. Wie die Form der Transportrolle 8 von einer Kugel abgeleitet ist, ist mit einem teilweise gestrichelten Umkreis 16 angedeutet. Die in Figur 1 dargestellte Transportrolle 8 ist eine Kugelscheibe, die von zwei parallelen, orthogonal zur Drehachse 10 liegenden Schnittebenen 18 ausgeschnitten ist. Die umlaufende kugeloberflächenartige Oberfläche 14 ist als gekrümmter Flächenteil der angedeuteten Kugel eine Kugelzone. Eine kugelartige oder kugelzonenartig ausgestaltete Transportrolle 8 erlaubt eine einfache Konstruktion der Transportrollen 8 und auch bei einer Veränderung der Ausrichtung einen stets gleichartigen Kontakt zwischen Transportrolle 8 und Gut 4. Die Transportebene 6 ist eine Tangentialfläche der Transportrolle 8, eine weitere Tangentialfläche der Transportrolle 8 besteht mit dem Antriebsmittel 12. Aufgrund der umlaufenden kugeloberflächenartigen Oberfläche 14 liegt das Gut 4 mit einem nahezu punktförmigen Auflagepunkt 27 auf der Transportrolle 8 auf. Um die Transportrolle 8 anzutreiben, werden Schub- und Schlupfkräfte vom Antriebsmittel 12 auf die Transportrolle 8 übertragen. Andere Möglichkeiten zum Antreiben der Transportrolle 8 sind ein in der Transportrolle 8 integrierter Antrieb oder ein Antrieb über Schwerkraftförderung. Zwischen Transportrolle 8 und transportiertem Gut 4 wirken stets Schub- und Schlupfkräfte. Ein Antrieb über Schwerkraftförderung ist besonders vorteilhaft auf geneigten Transportebenen 6, wie sie beispielsweise in Transportrutschen vorkommen, anwendbar.

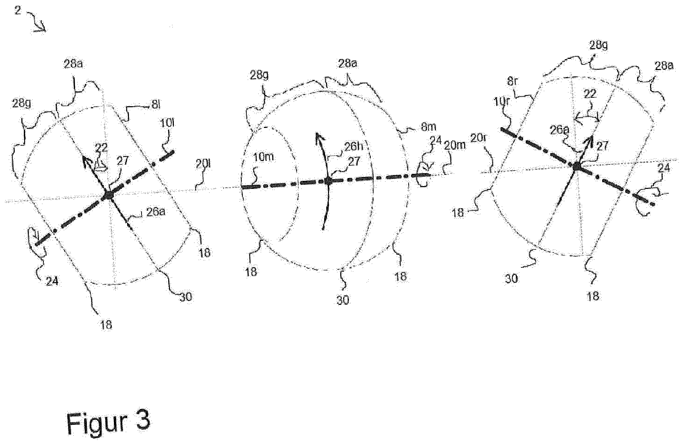

Das Fördersystem 2 weist eine Schwenkachse 20 auf, um welche die die gesamte Transportrolle 8 samt ihrer Drehachse 10 durch Rotation verstellbar ist. Die Schwenkachse 20 ist im Wesentlichen parallel zur und unterhalb der Transportebene 6 angeordnet. Die Transportrolle 8 ist auf einer Welle 21 gelagert. Drehachse 10 und Schwenkachse 20 schließen einen Drehachsenwinkel 22 ein. Da die Form der Transportrolle 8 von einer Kugel hergeleitet ist, ändert sich der Abstand zwischen den beiden oben eingeführten Tangentialflächen nicht. Durch den punktförmigen Auflagepunkt 27 des Gutes 4 auf der Transportrolle 8 bewirkt ein rotierendes Antreiben der Drehachse 10 mit einem positiven Drehachsen-Drehsinn 24 wie in Figur 1 angedeutet - bei Anordnung von Drehachse 10 und Schwenkachse 20 in einer Ebene, die orthogonal zur Transportebene 6 ist - einen aktiven Transport des Gutes 4 orthogonal zur Schwenkachse 20 mit einer Gut-Laufrichtung 26 in die Zeichnung hinein. Hierbei wird ein Schubanteil auf die Transportrolle 8 übertragen, der vom Drehachsenwinkel 22 abhängig ist. Diese Gut-Laufrichtung 26 wird im Folgenden stets als Haupt-Transportrichtung 26h bezeichnet, eine Abweichung als abgelenkte Transportrichtung 26a, wobei ein maximal möglicher Winkel zwischen als Haupt-Transportrichtung 26h und abgelenkter Transportrichtung 26a der bei einer Rotation der Schwenkachse 20 bzw. der Welle 21 um einen Schwenkachsenwinkel von +-90° erreicht wird und gleich dem Drehachsenwinkel 22 ist. Die abgelenkte Transportrichtung 26a und die Haupt-Transportrichtung 26h schließen einen Lenkwinkel ein, der abhängig einstellbar von sowohl Drehachsenwinkel 22, als auch Schwenkachsenwinkel ist. Der Schwenkachsenwinkel wird durch die Rotation um die Schwenkachse 20 verändert und ist 0° bzw. 180° wenn sich Schwenkachse 20 und Drehachse 10 in einer Ebene befinden, die orthogonal zur Transportebene 6 ist. Der Schwenkachsenwinkel beschreibt die positive oder negative Auslenkung der Schwenkachse 20, durch welche die Drehachse in die Zeichenebene hinein oder aus der Zeichenebene heraus rotiert wird. Eine weitere Beschreibung einer Beeinflussung der Gut Laufrichtung 26 erfolgt bei der Beschreibung von Figur 3.

Wenn nur eine maximale Auslenkung der Drehachse 10 um +-90° erlaubt ist, kommt das Gut 4 nur mit einer Hälfte der Oberfläche 14, einer Gut-Kontaktfläche 28g, in Kontakt; das Antriebsmittel 12 hingegen kommt nur mit der anderen Hälfte der 14, einer Antriebsmittel-Kontaktfläche 28a, in Kontakt.

Die Gut-Kontaktfläche 28g und die Antriebsmittel-Kontaktfläche 28a werden von einer Schnittfläche 30, welche den Mittelpunkt der durch den Umkreis 16 angedeuteten Kugel umfasst und orthogonal zur Drehachse 10 ausgerichtet ist, getrennt. Eine Trennung von Gut-Kontaktfläche 28g und Antriebsmittel-Kontaktfläche 28a ermöglicht einen Einsatz unterschiedlicher Materialien, die jeweils für eine optimale Kraftübertragung zwischen Gut 4 bzw. Antriebsmittel 12 und Transportrolle 8 optimiert sind.

Durch die Schrägstellung der Drehachse 10 um den Drehachsenwinkel 22 hat die Transportrolle 8 bei Rotation um ihre Drehachse 10 einen Wirkradius 32w, welcher kleiner als ein Kugelradius 32r ist. Daraus folgt für eine Transportrolle 8 mit eigenem Antrieb, dass die Geschwindigkeitskomponente in Gut-Laufrichtung 26 auch bei Ablenkung gleich bleibt. Bei steigender Verstellung wächst der Wirkradius 32w bis auf das Maß des Kugelradius 32r. Das heißt, die Querkomponente des Geschwindigkeitsvektors wird inhärent erhöht. Bei einem Antrieb über Antriebsmittel 12 ist immer eine Drehzahlanpassung des Antriebsmittels 12 bei größerem Drehachsenwinkel 22 erforderlich, um das Gut 4 mit gleichbleibender Geschwindigkeit zu transportieren.

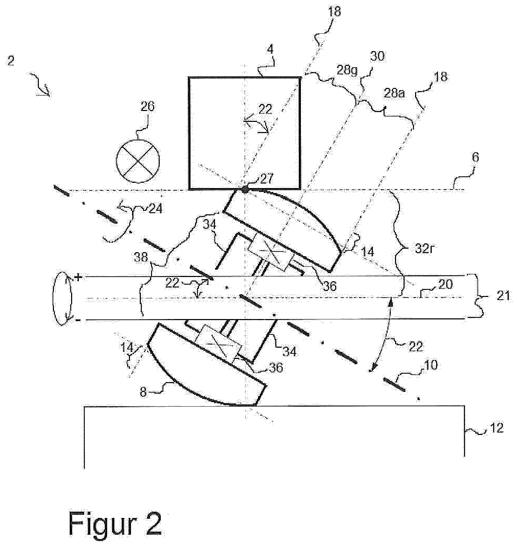

Figur 2 zeigt schematisch eine seitliche Ansicht eines Fördersystems 2 gemäß einer bevorzugten Ausführungsform der Erfindung wie in Figur 1, allerdings mit technischen Details einer Transportrolle 8. Das Fördersystem 2 umfasst einen Schrägsteller 34, der in die Transportrolle 8 integriert ist und mit welchem die Drehachse 10 im Drehachsenwinkel 22 zur Schwenkachse 20 einstellbar ist. Eine Einstellung des Drehachsenwinkels 22 erfolgt insbesondere konstruktionsseitig, da Schrägsteller 34 meist nur für einen spezifischen Drehachsenwinkel 22 ausgestaltet ist. Ein noch breiterer Einsatzbereich durch unterschiedliche maximale abgelenkte Transportrichtungen 26a würde durch einen Schrägsteller 34 ermöglicht werden, der eine Einstellung des Drehachsenwinkels 22 auch nach Inbetriebnahme des Fördersystems 2 im laufenden Betrieb ermöglicht.

Um eine reibungsarmes rotierendes Antreiben der Transportrolle 8 und somit einen energieeffizienten Transport des Gutes 4 zu ermöglichen, umfasst die Transportrolle 8 ein als Wälzlager 36 ausgestaltetes Lager. Eine Ausgestaltung des Lagers als Gleitlager wäre ebenfalls möglich. Das Wälzlager 36, das beispielsweise als Kugellager ausgestaltet sein kann, und Schrägsteller 34 sind Teil eines Lagers 38 der Transportrolle 8.

Schrägsteller 34, Welle 21, und insbesondere Schwenkachse 20 und Transportrolle 8 sind formschlüssig und optional zur zusätzlichen Absicherung noch kraftschlüssig miteinander verbindbar ausgestaltet, so dass eine besonders effiziente Weiterleitung von Rotationsbewegungen erfolgt, da sich Schwenkachse 20, Schrägsteller 34 und insbesondere Transportrolle 8 und Welle 21 so nicht gegeneinander verdrehen können. Formschlüssig verzahnte Verbindungen sind außerdem besonders stabil und wartungsarm. Sie können besonders einfach als Spritzgussteile realisiert werden. Die Verbindungen könnten jedoch auch rein kraftschlüssig ausgestaltet werden.

Figur 3 zeigt eine Aufsicht auf drei identisch ausgestaltete Transportrollen 81, 8m, 8r mit unterschiedlich ausgerichteten Schwenkachsen 201, 20m, 20r gemäß einer bevorzugten Ausführungsform der Erfindung um zu illustrieren, wie die Gut-Laufrichtung 26 beeinflussbar ist. Bei der in der zeichnerischen Darstellung mittig angeordnete Transportrolle 8m befinden sich Drehachse 10m und Schwenkachse 20m wie bereits in Figur 1 und 2 dargestellt in einer Ebene, so dass ein Gut 4 orthogonal zur Schwenkachse 20 in die Haupt-Transportrichtung 26h transportiert wird.

Die Schwenkachse 201 der linken Transportrolle 81 wurde negativ um 90° rotiert, was in der zeichnerischen Darstellung von Figur 1 und 2 einem Rausdrehen der Drehachse 10 aus der Zeichenebene hinaus hin zum Betrachter entspricht. Als Folge hiervon wird ein Gut 4 nach links transportiert in eine abgelenkte Transportrichtung 26a, die mit der Haupt-Transportrichtung 26h einen Drehachsenwinkel 22 einschließt. Bei der rechten Transportrolle 8r wurde die Schwenkachse 20r positiv um 90° rotiert, was in Figur 1 und 2 einem Reindrehen der Drehachse 10 in die Zeichenebene weg vom Betrachter entspricht.

Um innerhalb des vom Drehachsenwinkel 22 vorgegebenen Rahmens andere Gut-Laufrichtungen 26 zu erzielen, wird die Schwenkachse 20 weniger als oder um +-90° rotiert. Bei allen drei Transportrollen 81, 8m, 8r befindet sich ein Auflagepunkt 27 eines Gutes 4 auf der Transportrolle 8 stets nur auf der Gut-Kontaktfläche 28g und nicht auf der Antriebsmittel-Kontaktfläche 28a. Da keine größere Auslenkung der Schwenkachse 20 als 90° erfolgt, kommt es zu keiner Vermischung der Kontaktflächen 28a, 28g. Eine Ausgestaltung der Transportrolle 8 als Vollkugel würde eine vollständige 360°-Rotation der Schwenkachse 20 erlauben, allerdings ist bereits nach einer Rotation um +-90° der maximal mögliche Winkel der abgelenkten Transportrichtung erreicht. Darüber hinaus würde dies auch eine Vermischung der Kontaktflächen 28a, 28g bewirken und somit keinen Einsatz unterschiedlicher Materialien erlauben.

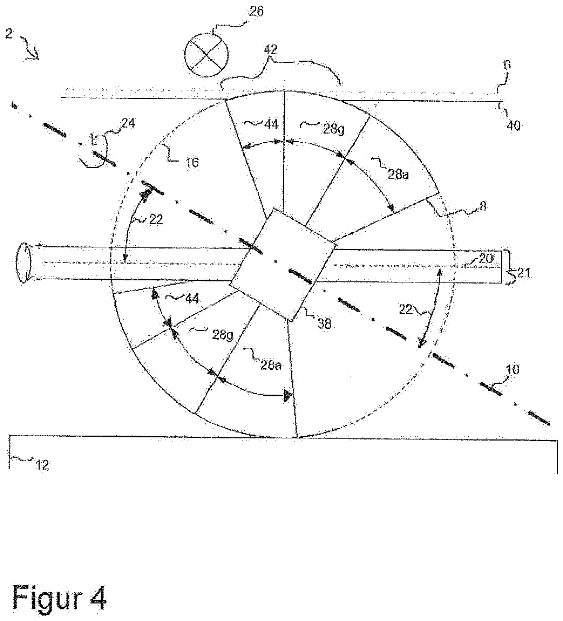

Figur 4 zeigt einen Querschnitt einer Transportrolle 8 eines Fördersystems 2 wie in Figur 1 und 2 dargestellt mit einer unterhalb der Transportebene 6 angeordneten Abdeckung 40 gemäß einer bevorzugten Ausführungsform der Erfindung. Die Abdeckung 40 umfasst eine Aussparung 42 für die Transportrolle 8. Die Aussparung 42 ist kreisförmig. Die umlaufende Oberfläche 14 der Transportrolle 8 ist aufgeteilt in eine Antriebsmittel-Kontaktfläche 28a, eine Gut-Kontaktfläche 28g und umfasst noch eine Überstands-Oberfläche 42, die weder mit dem Gut 4, noch mit dem Antriebsmittel 12 in Kontakt kommt - auch nach Rotation der Schwenkachse 20. Die Überstands-Oberfläche 42 sorgt dafür, dass eine perfekte kugeloberflächenartige Oberfläche 14 der Transportrolle 8 aus der Abdeckung 40 hervorschaut, sich also kein Spalt zwischen Abdeckung 40 und Transportrolle 8 öffnet, also keine Fang-, Quetsch- und/ oder Scherstellen entstehen. Wenn eine stärkere Rotation der Schwenkachse 20 als +-90° möglich wären, könnte keine Abdeckung 40 eingesetzt werden. Die Abdeckung 40 schützt das Fördersystem 2, insbesondere das Lager 38 mit seinen beweglichen Teilen vor einer Beschädigung durch ein Gut 4 und umgekehrt und vor Verunreinigungen und Bedienpersonal vor Verletzungen.

Im Folgenden sollen geometrische Verhältnisse und Größenverhältnisse des Fördersystems 2 exemplarisch mit einem Zahlenbeispiel veranschaulicht werden. Die Transportrolle 8 ist abgeleitet von einer Kugel mit 80 mm Durchmesser und die Drehachse 10 ist in einem Drehachsenwinkel 22 von 30° zur Schwenkachse 20 angeordnet. Die Gut-Kontaktfläche 28g erstreckt sich über eine Winkelausdehnung von eben dem Drehachsenwinkel 22, also 30°. Die Abdeckung 40 ist 2 mm unterhalb der Transportebene 6 angeordnet, so dass die Überstand-Oberfläche 44 eine Winkelausdehnung von 20° oder auch mehr - je nach gewünschter Sicherheitsmarge - aufweist. Die Antriebsmittel-Kontaktfläche 28a weist eine Winkelausdehnung von 35° auf - davon sind 30° durch den Drehachsenwinkel 22 bedingt, sowie zusätzlich ein Sicherheitsaufschlag von 5° um ein Reiben einer Kante der Transportrolle 8auf dem Antriebsmittel 12 zu verhindern. 32,9 mm beträgt der Wirkradius 32r bei der in Figur 4 gezeigten Anordnung. Die Welle 21 ist ein Vierkant mit quadratischem Querschnitt und Seitenlänge 10mm.

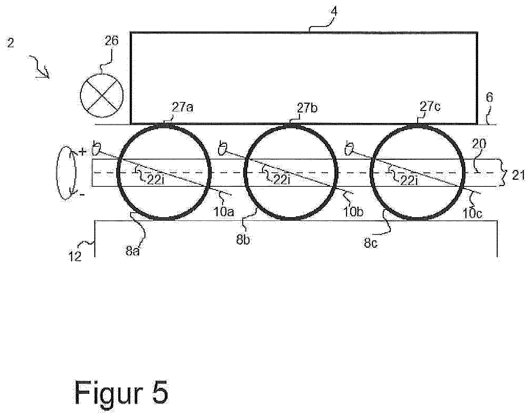

Figur 5 zeigt eine seitliche Ansicht eines mehrere Transportrollen 8a, 8b, 8c umfassenden Fördersystems 2 gemäß einer bevorzugten Ausführungsform der Erfindung. Die Transportrollen 8a, 8b, 8c sind entlang einer Breite der Transportebene 6 auf einer gemeinsamen Welle 21 mit gemeinsamer und somit identischer Schwenkachse 20 angeordnet, so dass das Gut 4 gleichzeitig von mehreren Transportrollen 8a, 8b, 8c abgelenkt wird. Das Gut 4 liegt an drei Auflagepunkten 27a, 27b, 27c auf den Transportrollen 8a, 8b, 8c auf und wird so noch besser geführt. Dies verhindert eine unbeabsichtigte Drehung des Gutes 4, die insbesondere passieren kann, wenn nur eine Transportrolle 8 auf ein Gut 3 einwirkt. Mehrere entlang einer Breite der Transportebene 6 angeordneten Transportrollen 8 ermöglichen es ebenfalls, zwei oder mehr nebeneinander auf der Transportebene 6 beförderte Güter 4 zugleich abzulenken - zumindest wenn die Anordnung der Transportrollen 8 genauso breit wie die zwei oder mehr Güter 4 nebeneinander ist.

Es erfolgt ein gemeinsames rotierendes Antreiben der drei Transportrollen 8a, 8b, 8c. Dies kann technisch besonders einfach mit einem Antriebsmittel 12 durchgeführt werden, wenn die Transportrollen 8a, 8b, 8c wie in Figur 5 dargestellt gemeinsam auf einer Welle 21 gelagert sind. Die Welle 21 ist entlang der gemeinsamen und somit identischen Schwenkachse 20 der drei Transportrollen 8a, 8b, 8c angeordnet. Die Transportrollen 8a, 8b, 8c sind gleichartig schräg mit dem gleichen Drehachsenwinkel 22i auf der Welle 21 eingestellt und weisen daher parallele Drehachsen 10a, 10b, 10c auf. Die Drehachsen 10a, 10b, 10c bleiben dabei auch bei Rotation der Schwenkachse 20 stets parallel zueinander. Wenn sich die Drehachsen 10a, 10b, 10c und die Schwenkachse 20 wie in Figur 5 dargestellt in einer Ebene, die orthogonal zur Transportebene 6 ist, erfolgt ein Transport des Gutes 4 orthogonal zur Zeichenebene.

Zusätzlich zu einer Anordnung der Transportrollen 8a, 8b, 8c entlang der Breite der Transportebene 6, können in einem Fördersystem 2 noch zusätzliche Transportrollen 8 entlang einer Länge der Transportebene 6 angeordnet sein. Wenn die zusätzlichen Transportrollen 8 genau wie die in Figur 5 dargestellten Transportrollen 8a, 8b, 8c auf einer zweiten, gemeinsamen Welle 21z und somit mit identischer Schwenkachse 22z angeordnet sind und zusätzlich noch den gleichen identischem Drehachsenwinkel 22i wie die Transportrollen 8a, 8b, 8c aufweisen, lenken die zusätzlichen Transportrollen 8 ein oder mehr Güter 4 bei Einstellung des gleichen Schwenkachsenwinkels gleichartig ab - zumindest wenn die zweite Welle 21z parallel zur Welle 22 der Transportrollen 8a, 8b, 8c angeordnet ist. Die Transportrollen 8 und 8a, 8b, 8c weisen dann parallele Schwenkachsen 22, 22z auf. Die Transportrollen 8a, 8b, 8c haben eine gemeinsame und somit identische Schwenkachse 22. Ein oder mehr Güter 4 werden so von allen Transportrollen 8, 8a, 8b, 8c gleichartig abgelenkt, was eine besonders einfache Steuerung der Transportrollen 8 ermöglicht.

Bei einer Anordnung der Transportrollen 8 entlang der Länge der Transportebene 6 kann die Gut-Laufrichtung 26 mehrfach entlang des vom Gut 4 zurückgelegten Weges durch Rotation der Schwenkachsen 22 verändert werden. Wenn die mehreren Transportrollen 8 entlang einer Länge und Breite der Transportebene 6, bilden die Transportrollen 8 ein kugelrollenteppichartiges Fördersystem 2. Um ein Gut 4 um eine gedachte Kurve zu fahren, können Drehachsenwinkel 22 und/ oder Schwenkachsenwinkel unterschiedliche sein. Auch nicht zueinander parallele Schwenkachsen 20 entlang der Transportebene 6 können dies bewirken.

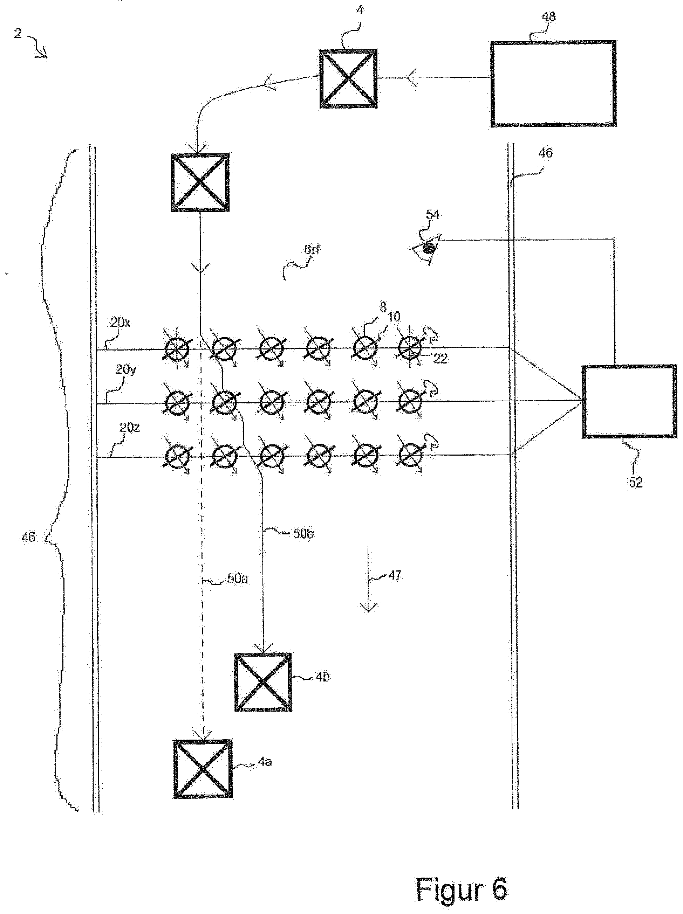

Figur 6 zeigt gemäß einer weiteren bevorzugten Ausführungsform der Erfindung ein Fördersystem 2, das eine Transportrutsche 46 umfasst, die insbesondere ausgestaltet ist für Güter 4 wie Pakete und Gepäckstücke und somit als Endstelle eines Sorters einer Postsortieranlage anwendbar ist. Die Transportrutsche 46 umfasst mindestens einen Rutschabschnitt der eine geneigte Rutschfläche 6rf aufweist mit einer Fallrichtung 47 der Güter 4 entlang der Rutschfläche. Die Rutschfläche 6rf stellt also die zumindest teilweise geneigte Transportebene 6, mit einer typischen Neigung von etwa 5°, dar und umfasst mindestens eine mehrere Transportrollen 8, die entlang Breite und Länge der Transportebene 6 der Transportrutsche 46 angeordnet sind und als rollenteppichartige Breitenverteilungsvorrichtung anwendbar sind. Je sechs der Transportrollen 8 haben eine gemeinsame Schwenkachse 20, bilden also eine Transportrollenzeile, und alle Transportrollen 8 haben bei einem Schwenkachsenwinkel von 0° identische Drehachsenwinkel 22 und somit parallel ausgerichtete Drehachsen 10.

Die Transportrollen 8 der Transportrutsche 46 sind ausgestaltet, die Güter über Schwerkraftförderung zu transportieren. Hierzu sind die Transportrollen 8 als von dem Eigengewicht der Güter 4 bewegbare Schwerkraftrollen ausgestaltet, die Bremsrollen, die die Ablaufgeschwindigkeit konstant halten, umfassen. Eine zusätzliche Bremsfunktion kann durch verschiedene Techniken in die Rollenbahn integriert werden, die beispielsweise einen Bremsmotor, eine Friktionsbremse oder eine Zentrifugalkupplung umfassen. Eine weitere Möglichkeit, ein Gut 4 zu bremsen und dadurch kontrolliert die Transportrutsche 46 entlang zu transportieren, besteht darin, die jeweils auf einer Höhe angeordneten Transportrollen 8 so anzuordnen so anzuordnen, dass die Transportrollenzeilen abwechseln gegensinnig ablenken. So könnte beispielsweise die erste Transportrollenzeile mit der Schwenkachse 20x ein Gut 4 zunächst um einen Lenkwinkel von +10° zur Fallrichtung 47 ablenken und die zweite, sowie jede weitere übernächste Transportrollenzeile mit der Schwenkachse 20y einen Lenkwinkel von -10° aufweisen. Die dritte, sowie jede weitere übernächste Transportrollenzeile mit der Schwenkachse 20z würde dann wieder um einen Lenkwinkel von +10° ablenken. Insbesondere größere Güter 4, die meist auch schwerer sind, liegen auf mehreren Rollenzeilen auf und haben damit je nach Betrag des Lenkwinkels einen entsprechenden Gleitreibungsanteil bei ihrer Förderung, wodurch die Förderung gebremst wird. Dieser Gleitreibungsanteil ist durch den Betrag des Lenkwinkels einstellbar, wobei der Lenkwinkel abhängig von sowohl Drehachsenwinkel 22, als auch Schwenkachsenwinkel ist. Da die Schwerkraftförderung die Gewichtskraft der Güter 4 zum Antrieb ausnutzt, ermöglicht sie eine besonders einfache, energieeffiziente und wartungsarme Konstruktion, um die Transportrollen 8 anzutreiben.

Ein Gut 4 wird mit Hilfe einer Einschleusvorrichtung 48 ausgehend von einem Sorter in die Transportrutsche 46 eingeschleust. Vor dem Einschleusen weist das Gut eine nicht mit der Fallrichtung 47 übereinstimmende Bewegungsrichtung auf mit einer gleichen linearen Geschwindigkeitskomponente wie der Sorter, beispielsweise 2,5m/s. Daher sammeln sich Güter 4 ohne Beeinflussung ihrer Trajektorie 50 entlang der Rutschfläche 6rf aufgrund ihrer Trägheit auf der in der zeichnerischen Darstellung linken Seite der Transportrutsche 46 an, so wie das Gut 4a, da die lineare Geschwindigkeitskomponente des Sorters weitgehend erhalten bleibt und nur durch Reibung ungeregelt abgebremst wird. Es baut sich so eine unsymmetrische Befüllung der Transportrutsche 46 auf Wenn sich Drehachsen 10 und Schwenkachsen 20 in einer Ebene befinden, die orthogonal zur Fallrichtung 47 ist, der Schwenkachsenwinkel also 0° ist, ändern die Transportrollen 8 die Trajektorie 50 eines Gutes nicht. Das Gut 4a hat die Trajektorie 50a zurückgelegt. In Figur 5 sind alle Schwenkachsen 20x, 20y, 20z um 90° rotiert, so dass ein Gut 4b bei jedem Passieren einer Schwenkachse 20x, 20y, 20z von je zwei Transportrollen 8 abgelenkt wird, so eine abgelenkte Trajektorie 50b zurücklegt und sich so weiter unten auf der Transportrutsche 46 in der zeichnerischen Darstellung weiter rechts als das Gut 4a befindet. Wenn die Güter 4 nach Passieren der Transportrutsche 46 zunächst in dieser verbleiben, ermöglicht die Ablenkung mehrere Güter 4 eine bessere Ausnutzung der Transportrutsche 46 zur Speicherung.

Um ein Gut 4 weniger stark als das Gut 4b abzulenken, können entweder die Schwenkachsen 20x, 20y, 20z um weniger als 90° rotiert werden, oder aber nur eine oder zwei der Schwenkachsen 20x, 20y, 20z wird rotiert.

Da eine Rotation der Schwenkachsen 20x, 20y, 20z der Transportrollen 8 einfach und rasch erfolgt, sind die Güter flexibel lenkbar. Die Transportrollen 8 sind ausgestaltet, von einer Steuervorrichtung 52 gelenkt zu werden und hierzu mit dieser verbindbar. So ist die Trajektorie 50 der Güter 4 flexibel beeinflussbar. Einerseits können die Güter mit Hilfe von einem bereits existierenden Gut-Format-Vorwissen blind gelenkt und verteilt werden. Eine andere Möglichkeit ist die Verwendung eines mit der Steuervorrichtung 52 verbindbaren Detektors 54 und/ oder Sensors, um die Position der Güter 4 auf der Transportrutsche 46 zu detektieren und anschließend zu steuern. Hierzu ist die Steuervorrichtung 52 ausgestaltet, ausgehend von der Position der Güter 4 auf der Transportrutsche 46 die gerade die Rutschfläche 6rf passierenden Güter 4 zu steuern.

Gemäß einer weiteren bevorzugten Ausführungsform der Erfindung ermöglicht eine Verwendung der Transportrollen 8 in Transportrutschen 46, breitere Transportrutschen 46 ohne Trennwände zwischen den Endstellen. Dies hat den Vorteil einer flexiblen Einteilung von schmalen Low-Volume- und breiten High-Volume-Endstellen. Die Güter werden also nach dem Abwurf exakt auf ihre individuelle Spur nach unten gelenkt.

Gemäß einer weiteren bevorzugten Ausführungsform der Erfindung werden zwei oder mehr Transportrutschen 46, die analog zu den in Figur 6 dargestellten ausgestaltet sind, hintereinander in Fallrichtung 47 und/ oder leicht horizontal versetzt angeordnet, so dass eine Transportrutschen-Kaskade gebildet wird. Kurz vor Ende jeder einzelnen Transportrutsche 46 findet eine Gut-Identifizierung, beispielsweise mit Hilfe des Detektors 54 statt. Durch Rotation mindestens einer Schwenkachse 20 werden die Güter 4 in ihre jeweilige Sortierrichtung gelenkt. Wenn die Transportrutschen 46 nicht direkt aneinander anschließen, bildet sich ein Zwischenraum, über den die Güter 4 mit Hilfe der Transportrollen 8 lenkbar hin zur nächsten Transportrutsche 46 transportierbar sind, so dass diese Aufgabe nicht mehr von einem menschlichen Bediener übernommen werden muss.

Gemäß einer weiteren bevorzugten Ausführungsform der Erfindung ist das Fördersystem 2 als Steigförderer verwendbar, wobei bei dem Steigförderer die Transportebene 6 geneigt ist, mit einer Haupt-Transportrichtung 26h gegen ein Gefälle der Transportebene 6, wobei das Gefälle beispielswiese eine Steigung von 12° aufweist. Der Steigförderer muss nicht notwendigerweise lenkbar mit Transportrollen 8 ausgestaltet sein, zum Transport der Güter 4 ist auch eine Verwendung eines umlaufenden Antriebsmittels 12 möglich. An den Steigförderer schließt eine Transportrutsche 46, beispielsweise die in Figur 6 dargestellte, an.

Um ein Sorter-Modul auszubilden, werden Steigförderer und Transportrutsche 46 regelmäßig aneinander gereiht. Mit den Transportrollen 8 können die Güter 4 wahlweise zur einen oder anderen Seite oder geradeaus transportiert werden. Mehrere Sorter-Module können hintereinander angeordnet werden und so einen modular erweiterbaren Sorter geringer Durchsatzleistung ausbilden.

Gemäß einer weiteren bevorzugten Ausführungsform der Erfindung ist eine Skalierung des Fördersystems 2 problemlos möglich, so dass eine Gesamtteilung des Fördersystems 2 problemlos möglich ist. Kleinere Drehachsenwinkel 22 führen zu einem geringeren Verschleiß.

### Bezugszeichenliste

- 2: Fördersystem
- 4: Gut
- 6: Transportebene
- 8: Transportrolle
- 10: Drehachse
- 12: Antriebsmittel
- 14: kugeloberflächenartige Oberfläche der Transportrolle 8
- 16: Umkreis einer Kugel
- 18: Schnittebene
- 20: Schwenkachse
- 21: Welle
- 22: Drehachsenwinkel
- 24: Drehachsen-Drehsinn
- 26: Gut-Laufrichtung
- 26h: Haupt-Transportrichtung
- 26a: abgelenkte Transportrichtung
- 27: Auflagepunkt
- 28a: Antriebsmittel-Kontaktfläche
- 28g: Gut-Kontaktfläche
- 30: Schnittfläche zwischen Antriebsmittel-Kontaktfläche 28a und Gut-Kontaktfläche 28g
- 32w: Wirkradius
- 32r: Kugelradius
- 34: Schrägsteller
- 36: Wälzlager
- 38: Lager
- 40: Abdeckung
- 42: Aussparung
- 44: Überstand-Oberfläche
- 46: Transportrutsche
- 47: Fallrichtung
- 48: Einschleusvorrichtung
- 50: Trajektorie eines Gutes 4 entlang der Rutschfläche 6rf
- 52: Steuervorrichtung
- 54: Detektor

## Patentansprüche

1. Fördersystem (2) geeignet zum Transport von Gütern auf einer Transportebene (6), wobei
a) das Fördersystem (2) mindestens eine für den Transport der Güter (4) vorgesehene Transportrolle (8) umfasst, welche zumindest in einem für einen Kontakt mit den Gütern vorgesehenen Bereich eine umlaufende kugeloberflächenausschnittartige Oberfläche (14) aufweist;
b) die mindestens eine Transportrolle (8) um eine Drehachse (10) rotierbar ist; und
**dadurch gekennzeichnet, dass**
das Fördersystem (2) mindestens eine Schwenkachse (20) aufweist, um welche die Drehachse (10) durch Rotation verstellbar ist.

2. Fördersystem (2) nach Anspruch 1, **dadurch gekennzeichnet, dass**
die mindestens eine Schwenkachse (20) im Wesentlichen parallel zur Transportebene (6) angeordnet ist.

3. Fördersystem (2) nach einem der Ansprüche 1 bis 2, **dadurch gekennzeichnet, dass**
die Drehachse (10) und die mindestens eine Schwenkachse (20) einen Drehachsenwinkel (22) einschließen.

4. Fördersystem (2) nach einem der Ansprüche 1 bis 3, **dadurch gekennzeichnet, dass**
die mindestens eine Transportrolle (8) antreibbar ist, insbesondere um ihre Drehachse (10) mit einem Antrieb in der Transportrolle (8) und/ oder einem unterhalb der Transportrolle (8) angeordneten Antriebsmittel (12) und/ oder Schwerkraftförderung.

5. Fördersystem (2) nach einem der Ansprüche 1 bis 4, **dadurch gekennzeichnet, dass**
das Fördersystem (2) mindestens einen Schrägsteller (34) umfasst, mit welchem die Drehachse (10) der mindestens einen Transportrolle (8) schräg einstellbar ist.

6. Fördersystem (2) nach einem der Ansprüche 1 bis 5, **dadurch gekennzeichnet, dass**
die mindestens eine Transportrolle (8) mindestens ein Lager, insbesondere ein Wälzlager (36), umfasst.

7. Fördersystem (2) nach einem der Ansprüche 1 bis 6, **dadurch gekennzeichnet, dass**
eine Abdeckung (40) unterhalb der Transportebene (6) angeordnet ist, wobei die Abdeckung (40) eine Aussparung (42) für jede Transportrolle (8) umfasst.

8. Fördersystem (2) nach einem der Ansprüche 1 bis 7, **dadurch gekennzeichnet, dass**
das Fördersystem (2) mehrere Transportrollen (8) umfasst, die entlang einer Breite und/ oder einer Länge der Transportebene (6) angeordnet sind.

9. Fördersystem (2) nach einem der Ansprüche 1 bis 8, **dadurch gekennzeichnet, dass**
die Transportrolle (8) kugelartig oder kugelzonenartig ausgestaltet ist.

10. Fördersystem (2) nach einem der Ansprüche 1 bis 9, **dadurch gekennzeichnet, dass**
die eine oder die mehreren Transportrollen (8) auf mindestens einer Welle (21) gelagert sind.

11. Fördersystem (2) nach Anspruch 10, **dadurch gekennzeichnet, dass**
die mindestens eine Welle (21) formschlüssig und/ oder kraftschlüssig mit der mindestens einen Transportrolle (8) verbindbar ist.

12. Verfahren zum Transport von Gütern mit einem Fördersystem (2) auf einer Transportebene (6), wobei
a) das Fördersystem (2) mindestens eine für den Transport der Güter (4) vorgesehene Transportrolle (8) umfasst, welche zumindest in einem für einen Kontakt mit den Gütern vorgesehenen Bereich eine umlaufende kugeloberflächenausschnittartige Oberfläche (14) aufweist;
b) die Transportrolle (8) um ihre Drehachse (10) rotierbar ist; und
c) das Fördersystem (2) mindestens eine Schwenkachse (20) aufweist, um welche die Drehachse (10) durch Rotation verstellbar ist;
umfassend den Verfahrensschritt
eines rotierendes Antreibens der mindestens einen Transportrolle (8), insbesondere mit einem Antrieb in der Transportrolle (8) und/ oder einem unterhalb der Transportrolle (8) angeordneten Antriebsmittel (12) und/ oder Schwerkraftförderung.

13. Verfahren nach Anspruch 12, **gekennzeichnet durch** eine Schrägstellung der Drehachse (10) der mindestens einen Transportrolle (8) um ihren Drehachsenwinkel (22) und/ oder ein Verstellen der Drehachse (10) durch Rotation um ihre Schwenkachse (20).

14. Verfahren nach einem der Ansprüche 12 bis 13, **gekennzeichnet durch**
ein gemeinsames rotierendes Antreiben von mehr als einer Transportrolle (8).

15. Verfahren nach einem der Ansprüche 12 bis 14, **dadurch gekennzeichnet, dass**
zwei oder mehr der Transportrollen (8) parallele und/ der nicht parallele Drehachsen (10), parallele und/ oder identische Schwenkachsen (20) und gleiche und/ oder verschiedene Schwenkachsenwinkel aufweisen.

## Claims

1. Conveying system (2) suited to transporting goods on a transport level (6), wherein
a) the conveying system (2) comprises at least one transport roller (8) provided for the transportation of the goods (4), which has a peripheral surface (14) in the manner of a spherical surface section at least in a region provided for contact with goods;
b) the at least one transport roller (8) can be rotated about an axis of rotation (10); and
**characterised in that**
the conveying system (2) has at least one swivel axis (20), about which the axis of rotation (10) can be adjusted by means of rotation.

2. Conveying system (2) according to claim 1,
**characterised in that**
the at least one swivel axis (20) is arranged substantially parallel to the transport level (6).

3. Conveying system (2) according to one of claims 1 to 2,
**characterised in that**
the axis of rotation (10) and the at least one swivel axis (20) include an axis of rotation angle (22).

4. Conveying system (2) according to one of claims 1 to 3,
**characterised in that**
the at least one transport roller (8) can be driven, in particular about its axis of rotation (10) with a drive in the transport roller (8) and/or a drive means (12) and/or gravity feed arranged below the transport roller (8).

5. Conveying system (2) according to one of claims 1 to 4,
**characterised in that**
the conveying system (2) comprises at least one oblique adjustment unit (34) with which the axis of rotation (10) of the at least one transport roller (8) can be adjusted obliquely.

6. Conveying system (2) according to one of claims 1 to 5,
**characterised in that**
the at least one transport roller (8) comprises at least one bearing, in particular a roller bearing (36).

7. Conveying system (2) according to one of claims 1 to 6,
**characterised in that**
a cover (40) is arranged below the transport level (6), wherein the cover (40) comprises a recess (42) for each transport roller (8).

8. Conveying system (2) according to one of claims 1 to 7,
**characterised in that**
the conveying system (2) comprises a number of transport rollers (8), which are arranged along a width and/or a length of the transport level (6).

9. Conveying system (2) according to one of claims 1 to 8,
**characterised in that**
the transport roller (8) is designed in the manner of a sphere or spherical zone.

10. Conveying system (2) according to one of claims 1 to 9,
**characterised in that**
the one or more transport rollers (8) are mounted on at least one shaft (21).

11. Conveying system (2) according to claim 10,
**characterised in that**
the at least one shaft (21) can be connected to the at least one transport roller (8) in a form-fit and/or force-fit manner.

12. Method for transporting goods with a conveying system (2) on a transport level (6), wherein
a) the conveying system (2) comprises at least one transport roller (8) provided for transportation of the goods (4), which has a peripheral surface (14) in the manner of a spherical surface section at least in a region provided for contact with the goods;
b) the transport roller (8) can be rotated about its axis of rotation (10); and
c) the conveying system (2) has at least one swivel axis (20), about which the axis of rotation (10) can be adjusted by means of rotation;
comprising the method step
of a rotating driving of the at least one transport roller (8), in particular with a drive in the transport roller (8) and/or a drive means (12) and/or gravity feed arranged below the transport roller (8).

13. Method according to claim 12,
**characterised by**
an oblique positioning of the axis of rotation (10) of the at least one transport roller (8) about its axis of rotation angle (22) and/or an adjustment of the axis of rotation (10) by rotation about its swivel axis (20).

14. Method according to one of claims 12 to 13,
**characterised by**
a shared rotating driving of more than one transport roller (8) .

15. Method according to one of claims 12 to 14,
**characterised in that**
two or more of the transport rollers (8) have parallel and/or non-parallel axes of rotation (10), parallel and/or identical swivel axes (20) and identical and/or different swivel axis angles.

## Revendications

1. Système de convoyeur (2) approprié pour le transport de marchandises sur un plan de transport (6), dans lequel
a) le système de convoyeur (2) comprend au moins un rouleau de transport (8) prévu pour le transport des marchandises (4), lequel présente au moins dans un espace prévu pour un contact avec les marchandises, une surface (14) de type découpe de surface sphérique périphérique ;
b) l'au moins un rouleau de transport (8) peut tourner sur un axe de rotation (10) ; et
**caractérisé en ce que**
le système de convoyeur (2) présente au moins un pivot (20) sur lequel l'axe de rotation (10) est mobile par rotation.

2. Système de convoyeur (2) selon la revendication 1, **caractérisé en ce que** l'au moins un pivot (20) est disposé essentiellement parallèle au plan de transport (6).

3. Système de convoyeur (2) selon l'une des revendications 1 à 2, **caractérisé en ce que** l'axe de rotation (10) et l'au moins un pivot (20) incluent un angle d'axe de rotation (22).

4. Système de convoyeur (2) selon l'une des revendications 1 à 3, **caractérisé en ce que**
l'au moins un rouleau de transport (8) peut être entraîné, en particulier sur son axe de rotation (10) avec un entraînement dans le rouleau de transport (8) et/ou un moyen d'entraînement (12) disposé en-dessous du rouleau de transport (8) et/ou par avancement par gravité.

5. Système de convoyeur (2) selon l'une des revendications 1 à 4, **caractérisé en ce que**
le système de transport (2) comprend au moins un inclineur (34) avec lequel l'axe de rotation (10) de l'au moins un rouleau de transport (8) peut être réglé incliné.

6. Système de convoyeur (2) selon l'une des revendications 1 à 5, **caractérisé en ce que** l'au moins un rouleau de transport (8) comprend au moins un palier, en particulier un palier à roulement (36).

7. Système de convoyeur (2) selon l'une des revendications 1 à 6, **caractérisé en ce qu'**un couvercle (40) est agencé en-dessous du plan de transport (6), dans lequel le couvercle (40) comprend un évidement (42) pour chaque rouleau de transport (8).

8. Système de convoyeur (2) selon l'une des revendications 1 à 7, **caractérisé en ce que** le système de convoyeur (2) comprend plusieurs rouleaux de transport (8) qui sont disposés le long d'une largeur et/ou d'une longueur du plan de transport (6).

9. Système de convoyeur (2) selon l'une des revendications 1 à 8, **caractérisé en ce que** le rouleau de transport (8) est de type sphérique ou conçu de type avec zone sphérique.

10. Système de convoyeur (2) selon l'une des revendications 1 à 9, **caractérisé en ce que** le ou les rouleau(x) de transport (8) sont disposés sur au moins un arbre (21).

11. Système de convoyeur (2) selon la revendication 10, **caractérisé en ce que**
l'au moins un arbre (21) peut être relié par complémentarité de formes et/ou de façon solidaire avec l'au moins un rouleau de transport (8).

12. Procédé pour le transport de marchandises comprenant un système de convoyeur (2) sur un plan de transport (6), dans lequel
a) le système de convoyeur (2) comprend au moins un rouleau de transport (8) prévu pour le transport des marchandises (4), lequel présente au moins dans un espace prévu pour un contact avec les marchandises, une surface (14) de type découpe de surface sphérique périphérique ;
b) le rouleau de transport (8) peut tourner sur son axe de rotation (10) ; et
c) le système de convoyeur (2) présente au moins un pivot (20) sur lequel l'axe de rotation (10) est mobile par rotation ; comprenant l'étape de procédé
d'un entraînement rotatif de l'au moins un rouleau de transport (8), en particulier avec un entraînement dans le rouleau de transport (8) et/ou un moyen d'entraînement (12) disposé en-dessous du rouleau de transport (8) et/ou par avancement par gravité.

13. Procédé selon la revendication 12, **caractérisé par** une inclinaison de l'axe de rotation (10) de l'au moins un rouleau de transport (8) sur son angle d'axe de rotation (22) et/ou un déplacement de l'axe de rotation (10) par rotation sur son pivot (20) .

14. Procédé selon l'une des revendications 12 à 13, **caractérisé par** un entraînement en rotation commun de plus d'un rouleau de transport (8).

15. Procédé selon l'une des revendications 12 à 14, **caractérisé en ce que** deux ou plusieurs des rouleaux de transport (8) présentent des axes de rotation (10) parallèles et/ou non-parallèles, des pivots (20) parallèles et/ou identiques et des angles de pivot égaux et/ou différents.
